# EUROPEAN PATENT APPLICATION

(11) **EP 1 624 712 A1**
(43) Date of publication of application: **08.02.2006**
(21) Application number: 04291979.5
(22) Date of filing: 03.08.2004
(51) Int. Cl.: H04Q 7/38

(54) **Method for improving mobility in discontinuous coverage networks, corresponding access controller, and corresponding radio access point**

(71) Applicant: ALCATEL, 75008 Paris (FR)
(72) Inventor: Faye, Jean-Claude, 91170 Gif sur Yvette (FR); Capdevielle, Veronique, 78114 Magny Les Hameaux (FR); Brignol, Luc, 75011 Paris (FR); Rouffet, Denis, 92100 Boulogne Billancourt (FR)
(74) Representative: Wetzel, Emmanuelle

(57) **Abstract**

The present invention relates to a method for providing services from a content server to a terminal belonging to a discontinuous coverage network, said terminal moving from a first radio coverage zone to a second radio coverage zone over a zone of non radio coverage, said discontinuous coverage network architecture comprising access controllers and radio access points each pair of access controller and radio access point defining a radio coverage zone.

According to the present invention, the method comprises the step of:
- Sending in advance from a first access controller data in a cache memory of at least one radio access point of said second radio coverage zone, when said terminal is outside the coverage of said second radio coverage zone.

## Description

### BACKGROUND OF THE INVENTION

The present invention relates to a method for improving mobility and service delivery in discontinuous coverage networks.

Discontinuous coverage networks are radio access networks which do not provide a continuous radio coverage contrary to conventional second or third generation radio access networks as GSM or UMTS. Such discontinuous coverage networks are constituted by islands of coverage supporting very high bit rates and low power cells. Such networks are commonly referred as fourth generation access networks. They provide video/audio streaming services and fast download or upload of large data volumes.

The islands are nevertheless separated by zones of non-radio coverage so that usual hand over between cells is not to be realized by common techniques.

In such networks, mobile terminals have a reduced mobility. They cannot leave the radio coverage area without loosing the connection.

A fast mobile IP solution is currently investigated at the IETF for solving this problem. Mobile IP solutions consists in introducing a home agent between the content server and the access controller. The IP address of the moving terminal is modified during terminal mobility. The current IP address of the moving terminal is stored at the home agent together with a permanent IP address. The mobility is totally transparent for the content server which sends the content to the permanent IP address. The translation is performed at the home agent which in turn identifies the access controller under the coverage of which the moving terminal is currently located. This solution enables it to support mobility in IP networks. Nevertheless, even if the speed of the process is accelerated, such a solution do not provide an efficient answer to the need for providing very high rate streaming services to a moving terminal leaving temporarily the zone of radio coverage.

A particular object of the present invention is to provide a method for enabling a continuous streaming service provision in the context of discontinuous coverage networks.

Another object of the invention is to provide an entity of the radio access network supporting the method.

### SUMMARY OF THE INVENTION

Introduce the fact that the cache is also needed in the terminal.

These objects, and others that appear below, are achieved by a method for providing service to a terminal belonging to discontinuous coverage networks according to claim 1, an access controller according to independent claim, and a multicast element according to independent claim.

According to the present invention, the method consists in filling in, in advance, the cache memory of the access controller and / or of the radio access point likely to be visited by the moving terminal in the next future. This method necessitates to anticipate the possible destination of the mobile terminal so that the content necessary for uninterrupted streaming service, or another example non real time service is e.g. file transfer, is available in the appropriate island of radio coverage as soon as the moving terminal enters this island of coverage.

The method according to the present invention presents the advantage to provide a seamless micro mobility as well as a seamless macro mobility to mobile terminals belonging to discontinuous coverage networks.

The method according to the present invention further presents the advantage to support continuous streaming services or an other non real time service is e.g. file transfer.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows an implementation of the present invention in the context of a discontinuous coverage radio access network supporting micro mobility;
- Figure 2 shows an implementation of the present invention in the context of a mobile IP based discontinuous coverage radio access network supporting macro mobility;
- Figure 3 shows an implementation of the present invention in the context of a 4G dedicated discontinuous coverage radio access network supporting macro mobility.

### DETAILED DESCRIPTION OF THE INVENTION

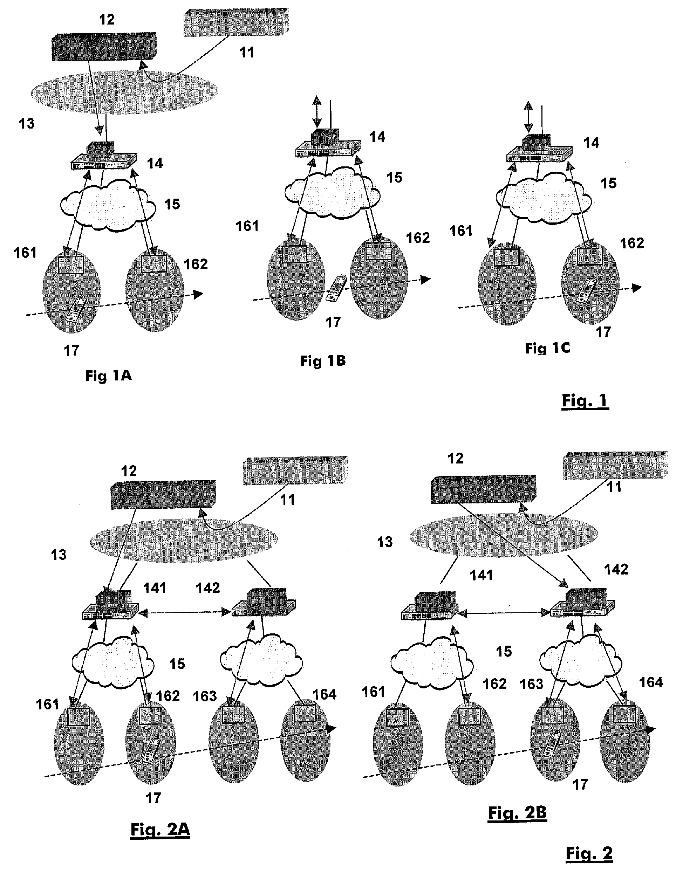

Figure 1 shows an implementation of the present invention in the context of a discontinuous coverage radio access network supporting micro mobility. Figure 1 illustrates an example of network architecture for such fourth generation radio access networks where the present invention may be implemented. The radio access network comprises content servers 11, access controllers 14, radio access points 161, 162 and terminals 17. Content server 11 and access controller 14 are connected to an IP network 13, access controller 14 and radio access points 161, 162 are connected to a transmission network 15. Terminals 17 are accessible from radio access points 161, 162 through an air interface.

Each pair (access controller, radio access point) (14, 161), (14, 162) defines a zone of radio coverage. In the example described below the radio coverage is discontinuous so that there remain areas of non radio coverage between two areas of radio coverage (14, 161), (14, 162). It will be understood by the person skilled in the art that the present invention may also apply to mixed continuous and discontinuous networks.

Fig 1A represents the case where terminal 17 is under radio coverage area (14, 161). The terminal inclused a cache memory. Figure 1 B represents the case where terminal 17 is not under any radio coverage area. Figure 1C represent the case where terminal 17 is entering coverage area (14, 162). This case illustrates the microdiversity case (i.e. two consecutive coverage areas visited by terminal 17 are serviced by the same access controller 14).

According to the present invention, access controller 14 determines a set of radio access points terminal 17 is likely to enter when moving further. Access controller then duplicate the data received form content server 11 and sends them data to all radio access points 161, 162 belonging to the set of radio access points. As a consequence the data are immediately available if terminal 17 enters in the near future one of this radio access points.

In figure 1 A, terminal 17 is under the radio coverage of radio access point 161, access controller 14 sends the same data to both radio access points 161 and 162. The data sent to radio access point 161 are used immediately as terminal 17 is under the coverage of this radio access point while the data sent to radio access point 162 are sent in advance in the eventuality that terminal 17 enters the coverage of this radio access point in the near future.

In figure 1B where terminal 17 is not under any radio coverage, access controller 14 continues to send the same data to both radio access point 161 and 162. The data are sent in advance in the eventuality that terminal 17 enters the coverage of one of these radio access points in the near future. The data are not used immediately and stored in a cache memory.

In figure 1C, terminal 17 is under the radio coverage of radio access point 162, access controller 14 sends the same data to both radio access point 161 and 162. The data sent to radio access point 162 are used immediately as terminal 17 is under the coverage of this radio access point while the data sent to radio access point 161 are sent in advance in the eventuality that terminal 17 enters the coverage of this radio access point in the near future.

The data sent in advance and not immediately used have to be stored in an appropriate cache memory which should be large enough to ensure that the whole data received during the period where terminal 17 is not under any coverage are available in the cache memory. The cache memory should be dimensioned using for example parameter as the average data throughput on the link between access controller 14 and radio access points 161, 162 or the average duration of the non coverage period for terminal 17.

The present inventions enables it to quickly re-load terminal 17 with the necessary data when terminal 17 enters a new area of coverage after having spent some time in non coverage area. This quick reloading is possible since the needed data are already present in the cache memory of radio access points 161, 162. It will be clear for those skilled in the art that an appropriate cache memory management should be performed, taking especially into account the location of terminal 17. A cache memory is also present in the terminal.

Figure 2 shows an implementation of the present invention in the context of a mobile IP based discontinuous coverage radio access network supporting macro mobility. Figure 2 illustrates an example of network configuration for such fourth generation radio access networks where the present invention may be implemented. The radio access network comprises content servers 11, access controllers 141, 142 radio access points 161, 162, 163, 164. Content server 11 and access controllers 141, 142 are connected to an IP network 13 which supports the mobile IP functionality thanks to Home Agent (HA) 12 and thanks to Foreign Agents (FA) each associated to one access controller. The HA is associated to the service provided by content server 11 and provides for a unique IP address for the terminal seen from content server 11. The FA are adapted to take in charge the mobility of the terminal by sending updated information to a table located in HA which registers under the control of which access controller 141, 142, terminal 17 is currently located. Consequently, a translation between the unique IP address used by content server 11 and the local IP address can take place and the data destined to terminal 17 are routed to the appropriate access controller 141, 142.

Access controllers 141, 142 and radio access points 161, ..., 164 are connected to a transmission network 15. Terminals 17 accessible from radio access points 161, ..., 164 through an air interface.

Each pair access controller, radio access point (141, 161), (141, 162), (142, 163), (142, 164) defines a zone of radio coverage. In the example described below the radio coverage is discontinuous so that there remain areas of non radio coverage between two areas of radio coverage. It will be understood by the person skilled in the art that the present invention may also apply to mixed continuous and discontinuous networks.

Fig 2A represents the case where the terminal 17 is under the radio coverage of the coverage area (141, 162). Figure 2B represents the case where the terminal 17 has moved to a new coverage area (142, 163). This case illustrates the macrodiversity case (i.e. the consecutive coverage areas visited by terminal 17 are serviced by different access controller 141, 142).

According to the present invention, the serving access controller 141 determines a set of access controllers terminal 17 is likely to be controlled by when moving further.

The serving access controller 141 duplicates the data and send them in advance to all access controllers 142 belonging to the set of access controller. Access controller 142 then forward the data to radio access points 163 in order for the data to be immediately available if terminal 17enters in the near future one of this radio access point.

In figure 2A terminal 17 is under the radio coverage of the pair (access controller 141, radio access point 162), access controller 141 sends the same data to both radio access point 161 and 162 (microdiversitiy) . Further access controller 141 sends the same data to access controller 142 (macrodiversity) which in turn forwards these data to radio access point 163. The data sent to radio access point 163 are sent in advance in the eventuality that terminal 17 enters the coverage of this radio access point in the near future.

The Home Agent is responsible for detecting the change of the serving access controller and to trigger the modification of the send in advance mechanism.

In figure 2B, the Home Agent has detected that the serving access controller has been modified from 141 to 142 because terminal 17 has moved to the radio coverage of radio access point 163 controlled by access controller 142. Access controller 142 is informed that it should control the "send in advance" mechanism. Consequently it determines the set of access controller 141 to which it should send duplicated data in advance.

The data sent in advance and not used immediately have to be stored in an appropriate cache memory at the access controller 141, 142 which should be large enough to ensure that the whole data received during the period where terminal 17 is not under any coverage are available in the memory. The cache memory should be dimensioned using for example as parameter an average data throughput on the link between access controller 141, 142 and radio access points 161, 162 as well as an average duration of the non coverage period for terminal 17.

In a preferred embodiment of the present invention, the network topology is stored in a decentralized way in the radio access network so that each access controller has the knowledge of its associated radio access points and the location of the radio access points. Consequently, it can determine the neighbor radio access points to which the data have to be sent in advance (micro diversity). In the case of macro diversity the access controllers should know the identity of its neighbor access controller so as to know to which access controllers it has to send the duplicated data.

In another embodiment a centralized topology of the network is possible.

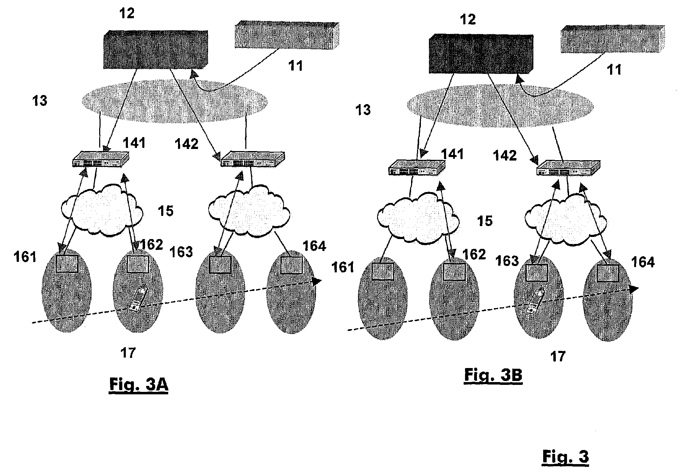

Figure 3 shows an implementation of the present invention in the context of a 4G dedicated discontinuous coverage radio access network supporting macro mobility. Figure 3 represents the same radio access network architecture as figure 2. The difference is that this embodiment does not rely on the mobile IP functionality but on a 4G dedicated solution comprising a multicast element 12 instead of Home Agent and Foreign Agents entities. The "send in advance" functionality is controlled by multicast element 12 which determines to which access controllers 141, 142 it has to send the duplicated data coming from content server 11.

This embodiment presents the advantage that the multicast element is a central element in the radio access network which controls the macrodiversity. The access controllers 141, 142 may consequently have a reduced complexity. The microdiversity remains nevertheless under the control of access controller 141, 142 as in the mobile IP embodiment described in connection with figure 2.
Mobile localization information comes from the radio access points. To increase performances, two zones are defined in a cell:
- a zone where data transfer is possible
- a larger zone where presence may be detected

This information is given to higher levels devices (centralized or decentralized architecture) where sending in advance must be done.

## Claims

1. Method for providing services from a content server to a terminal belonging to a discontinuous coverage network, said terminal moving from a first radio coverage zone to a second radio coverage zone over a zone of non radio coverage, said discontinuous coverage network architecture comprising access controllers and radio access points each pair of access controller and radio access point defining a radio coverage zone, said method comprising the step of:
- Sending in advance from a first access controller data in a cache memory of at least one radio access point of said second radio coverage zone, when said terminal is outside the coverage of said second radio coverage zone.

2. Method according to claim 1 further comprising the step of:
- Sending in advance from said first access controller data in a cache memory of at least a second access controller in the neighbourhood of said first access controller.

3. Method according to claim 2, further comprising the step of:
- Using mobile IP functionality to connect a home agent associated to said service to a foreign agent located in said second access controller when said terminal has entered said second coverage zone.

4. Method according to claim 1, further comprising the step of:
- Sending in advance from a multicast element data received from said content server in a cache memory of at least a second access controller in the neighbourhood of said first access controller when said terminal is not under the coverage of said second access controller.

5. Method according to claim 4, further comprising the step that a first level of address is handled between said content server and said multicast element and a second level of address is handled between said multicast element and said access controllers.

6. Method according to claim 1, wherein the services provided by said contend server to said terminal are streaming services.

7. Method according to claim 1, wherein the services provided by said contend server to said terminal are file transfer services.

8. Access controller belonging to a discontinuous coverage radio access network adapted to provide services from a content server to a terminal, said access controller being associated to a plurality of radio access points, said access controller being **characterized in that** it comprises:
- means for sending in advance data in a cache memory of at least one radio access point, when said terminal is outside the coverage of said radio access point.

9. Multicast element belonging to a discontinuous coverage radio access network adapted to provide services from a content server to a terminal, said multicast element being a central entity of said discontinuous coverage access network controlling a plurality of access controllers, said multicast element being **characterized in that** it comprises:
- means for sending in advance data in a cache memory of at least one access controller controlling a radio coverage zone, when said terminal is outside the coverage of said radio coverage zone.

10. Terminal containing a terminal cache memory For providing the method according claim 1.

## Amended claims

### Amended claims in accordance with Rule 86(2) EPC.

**1.** Method for providing services from a content server to a terminal belonging to a discontinuous coverage network, said terminal moving from a first radio coverage zone to a second radio coverage zone over a zone of non radio coverage, said discontinuous coverage network architecture comprising access controllers and radio access points, each pair of access controller and radio access point defining a radio coverage zone, said method comprising the steps of:
- Sending in advance from a multicast element data received from said content server to a cache memory of at least a second access controller in the neighbourhood of a first access controller when said terminal is in said zone of non radio coverage;
- Sending in advance from said second access controller data received from said multicast element to a cache memory of at least one radio access point of said second radio coverage zone, when said terminal is in said zone of non radio coverage

**2.** Method according to claim 1, further comprising the step that a first level of address is handled between said content server and said multicast element and a second level of address is handled between said multicast element and said access controllers.

**3.** Method according to claim 1, wherein the services provided by said content server to said terminal are streaming services.

**4.** Multicast element belonging to a discontinuous coverage radio access network adapted to provide services from a content server to a terminal adapted to move from a first radio coverage zone to a second radio coverage zone over a zone of non radio coverage, said multicast element being a central entity of said discontinuous coverage access network controlling a plurality of access controllers, said multicast element being **characterized in that** it comprises:
- means for sending in advance data from said content server destined to said terminal to a cache memory of at least one access controller controlling a radio coverage zone, when said terminal is in said zone of non radio coverage.
